# EUROPEAN PATENT APPLICATION

(11) **EP 4 245 702 A1**
(43) Date of publication of application: **20.09.2023**
(21) Application number: 20961644.0
(22) Date of filing: 16.11.2020
(51) Int. Cl.: B65G 47/57

(54) **CONVEYANCE EQUIPMENT**

(71) Applicant: Daifuku Co., Ltd., Osaka-shi, Osaka 555-0012 (JP)
(72) Inventor: FUJIO Yoshihiko, Gamo-gun, Shiga 529-1692 (JP)
(74) Representative: van Breda, Jacobus
(86) International application number: PCT/JP2020/042590
(87) International publication number: WO 2022/102121

(57) **Abstract**

Conveyance equipment 10 includes a first conveyor 20 that conveys a tray 90 on which an article 95 can be placed along a first conveyance path 11, and a second conveyor 30 that conveys the article 95 along a second conveyance path 12 provided above the first conveyance path 11. The second conveyor 30 loads the article 95 onto the tray 90 conveyed by the first conveyor 20. In at least a part of the first conveyor 20, an upward inclined portion 40A is formed to incline upward in a conveyance direction of the article 95.

## Description

### Technical Field

The present invention relates to conveyance equipment including a conveyor that conveys a tray on which an article is placed.

### Background Art

There has been conveyance equipment as shown in JPH08053221A as conveyance equipment including a conveyor that conveys a tray on which an article is placed. The conveyance equipment of JPH08053221A includes one conveyor that conveys baggage (articles) at a constant speed, and the other conveyor that is arranged below the one conveyor and conveys dish-shaped standard tabs on which baggage is to be carried. In the conveyance equipment of JPH08053221A, the operation of the one conveyor that conveys baggage and the operation of the other conveyor that conveys standard tabs are synchronized. Therefore, when baggage is dropped from the one conveyor that conveys the baggage, the baggage is directly carried on the standard tab, and is thereafter conveyed by the other conveyor that conveys the standard tabs to a subsequent process.

In the conventional conveyance equipment 100 as illustrated in FIG. 3, as shown in JPH08053221A, a first conveyor 110 that conveys a tray 190, and a second conveyor 120 that conveys an article 195 are arranged in two stages, top and bottom. In the conveyance equipment 100, at the timing when the article 195 is dropped from the second conveyor 120 to the first conveyor 110, the tray 190 is conveyed to the drop position of the article 195. Accordingly, the article 195 is placed on the tray 190, and is conveyed to a conveyance end edge side of the first conveyor 110 while being placed on the tray 190.

### Summary of Invention

### Technical Problem

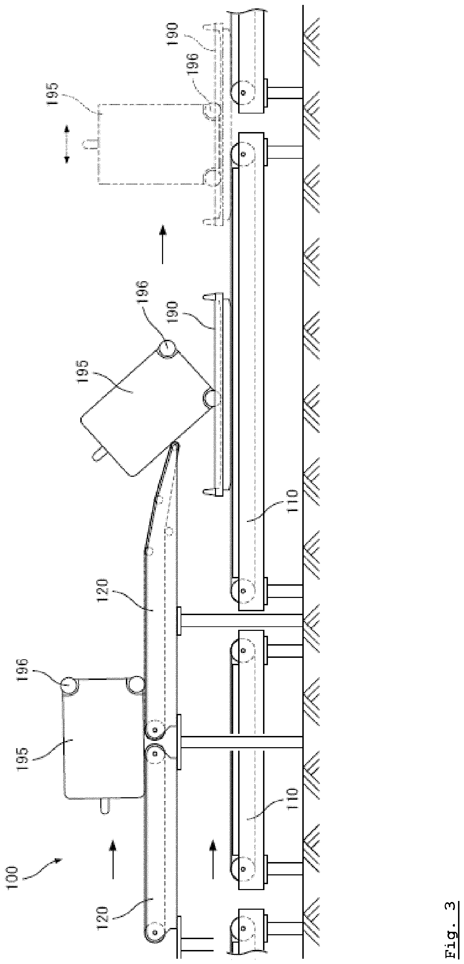

However, in the conventional conveyance equipment 100, as illustrated in FIG. 3, when the article 195 is loaded onto the tray 190 at an angle, particularly in a case of the article 195 whose center of gravity is skewed to one side (the front side in a conveyance direction) of the article 195, the article 195 may be placed on the tray 190 in an upright state. When the article 195 includes wheels 196 on a bottom surface, there is unfortunately a problem that the article 195 travels on the tray 190 while being conveyed on the tray 190, and as a result, the article 195 falls down on or is dropped from the tray 190.

Additionally, in the conventional conveyance equipment 100, the article 195 is dropped from substantially directly above the tray 190 on the first conveyor 110, so as to load the article 195 onto the tray 190. Therefore, there has unfortunately been a problem that the article 195 will be loaded onto the tray 190 in a manner in which the article 195 is thrown off from the second conveyor 120, the impact to the article 195 at the time when the article 195 is loaded onto the tray 190 is increased, and transfer of the article to the tray 190 cannot be smoothly performed.

Therefore, an object of the present invention is to provide conveyance equipment that can make it difficult for an article to be upright on a tray at the time when the article is loaded onto the tray, and that can suppress the impact to the article at the time when the article is loaded onto the tray.

### Solution to Problem

The problem to be solved by the present invention is described above, and solutions to this problem will be described below.

The conveyance equipment of the present invention includes a first conveyor that conveys a tray on which an article can be placed along a first conveyance path, and a second conveyor that is provided above the first conveyance path, and conveys the article along a second conveyance path, the second conveyor loading the article onto the tray conveyed by the first conveyor. In at least a part of the first conveyor, an upward inclined portion is formed to incline upward in a conveyance direction of the article.

In the above-described configuration, the second conveyor loads the article onto the tray conveyed on the first conveyor formed to be inclined upward.

In the conveyance equipment of the present invention, the first conveyor is constituted by at least a first conveyor unit and a second conveyor unit, the first conveyor unit is arranged below the second conveyor and parallel to the second conveyor, and the second conveyor unit is arranged adjacent to the first conveyor unit on a downstream side in the conveyance direction of the first conveyor unit.

In the above-described configuration, the first conveyor unit and the second conveyor are arranged in two stages, top and bottom. Additionally, the second conveyor unit is arranged on the downstream side of the first conveyor unit arranged below the second conveyor.

In the conveyance equipment of the present invention, in at least a part of the second conveyor unit, an upward inclined portion to incline upward in the conveyance direction of the article and a curved portion are formed.

In the above-described configuration, in at least a part of the second conveyor unit, the upward inclined portion and the curved portion are formed.

In the conveyance equipment of the present invention, the first conveyor includes a third conveyor unit that is arranged adjacent to the second conveyor unit on a downstream side in a conveyance direction of the second conveyor unit, and the third conveyor unit is arranged above the first conveyor unit.

In the above-described configuration, the third conveyor unit arranged on the downstream side of the second conveyor unit is arranged above the first conveyor unit.

In the conveyance equipment of the present invention, on the downstream side in a conveyance direction of the second conveyor, a downward inclined portion is formed to incline downward toward the first conveyor.

In the above-described configuration, the downstream side of the second conveyor is inclined downward toward the first conveyor.

In the conveyance equipment of the present invention, the second conveyor is constituted by a fourth conveyor unit arranged above and parallel to the first conveyor unit, and a fifth conveyor unit arranged adjacent to the fourth conveyor unit on a downstream side in a conveyance direction of the fourth conveyor unit, and in at least a part of the fifth conveyor unit, a downward inclined portion is formed to incline downward toward the first conveyor.

In the above-described configuration, the first conveyor unit of the first conveyor and the fourth conveyor unit of the second conveyor are arranged in two stages, top and bottom. Additionally, at least a part of the fifth conveyor unit arranged on the downstream side of the fourth conveyor unit is inclined downward toward the first conveyor.

### Advantageous Effects of Invention

According to the conveyance equipment of the present invention, an article can be loaded onto a tray with a posture that is substantially the same as the posture at the time of conveyance by a conveyor. Therefore, it is possible to make it difficult for a variety of articles to be upright on trays at the time when the articles are loaded onto the trays. Further, the distance between an article and a tray at the time when the article is loaded onto the tray is close, and the dropping distance of the article to the tray is short. Therefore, the impact to the article at the time when the article is loaded onto the tray is suppressed, and the article can be smoothly transferred to the tray.

### Brief Description of Drawings

FIG. 1 is a front view of conveyance equipment according to the present invention,
FIG. 2A is a diagram illustrating an operation of loading an article onto a tray in the conveyance equipment according to the present invention,
FIG. 2B is a diagram illustrating a subsequent operation of loading the article onto the tray in the conveyance equipment according to the present invention,
FIG. 2C is a diagram illustrating a still subsequent operation of loading the article onto the tray in the conveyance equipment according to the present invention, and
FIG. 3 is a front view of conventional conveyance equipment.

### Description of Embodiment

Conveyance equipment 10 of the present invention will be described. Note that the present invention is not limited to the conveyance equipment 10 illustrated below.

The conveyance equipment 10 is equipment used in, for example, a baggage conveyance system that classifies and conveys baggage after the baggage (an example of "article") is received from passengers in an airport until the baggage is loaded onto an airplane on which the passengers are scheduled to board. Note that the conveyance equipment 10 is not limited to equipment used in the baggage conveyance system in airports, and may be equipment used in a system that classifies and conveys articles.

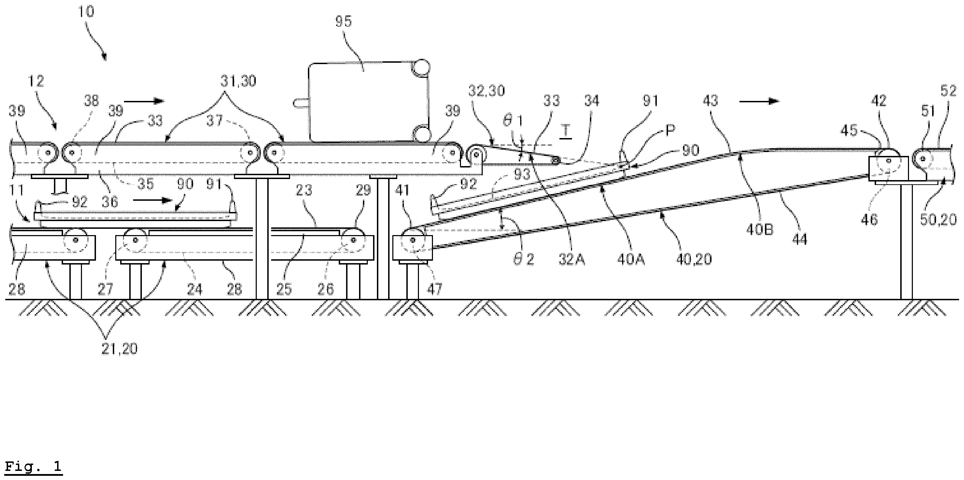

As illustrated in FIG. 1, a first conveyance path 11 that conveys trays 90 on which an article 95 can be placed, and a second conveyance path 12 that conveys the article 95 are formed in the conveyance equipment 10. In the conveyance equipment 10, the second conveyance path 12 is provided directly above the first conveyance path 11, and the article 95 is conveyed above the tray 90. In the conveyance equipment 10, the article 95 is loaded onto the tray 90 from the end of the second conveyance path 12. Accordingly, the article 95 is placed on the tray 90.

The second conveyance path 12 does not always need to be provided directly above the first conveyance path 11, and at least a part of the second conveyance path 12 from which the article 95 is loaded to the first conveyance path 11 may be provided directly above the first conveyance path 11. The present invention is not limited to a case where the article 95 is loaded onto the tray 90 from the end of the second conveyance path 12, and may be a configuration in which the article 95 is loaded from a middle part of the second conveyance path 12.

A storage area (not illustrated) for storing trays 90 is provided on an upstream side of the first conveyance path 11. The trays 90 on the first conveyance path 11 are conveyed from the storage area. The trays 90 on the first conveyance path 11 are not limited to trays to be conveyed from the storage area, and may be trays that circulates through and returns from article unloading equipment (not illustrated) described later. An article unloading equipment (not illustrated) for unloading the articles 95 from the trays 90 is provided on a downstream side of the first conveyance path 11. For example, a shipping area near an airplane in an airport, etc., can be listed as the article unloading equipment.

Article loading equipment (not illustrated) for loading articles 95 onto the second conveyance path 12 is provided on an upstream side of the second conveyance path 12. For example, a check-in counter of an airport lobby, etc., can be listed as the article loading equipment. An article loading position T from which the article 95 is loaded onto the tray 90 is provided on a downstream side of the second conveyance path 12.

As illustrated in FIG. 1, the tray 90 conveyed on the first conveyance path 11 is formed into a dish shape, so that the article 95 can be placed on the tray 90. The tray 90 is formed into a rectangle whose shape in plan view is longer in a front and back longitudinal direction, which serves as a conveyance direction, than in a left and right width direction. Rising wall plate portions 91 and 92 are provided to protrude from both ends in the front and back longitudinal direction of the tray 90 along the left and right width direction. An article placing portion 93 for placing the article 95 on the tray 90 is formed between the rising wall plate portions 91 and 92 of the tray 90.

As illustrated in FIG. 1, the conveyance equipment 10 includes a first conveyor 20 that conveys the trays 90 along the first conveyance path 11, and a second conveyor 30 that conveys the article 95 along the second conveyance path 12.

The first conveyor 20 is mainly constituted by a first conveyor unit 21, a second conveyor unit 40 that conveys the tray 90 conveyed by the first conveyor unit 21 toward the article 95 to be loaded from the second conveyor 30, and a third conveyor unit 50 that conveys the tray 90 conveyed by the second conveyor unit 40.

In the first conveyor unit 21, at least one or more (two in FIG. 1) belt conveyors 28 are arranged along the first conveyance path 11. The belt conveyor 28 is mainly constituted by a flat belt 24 that forms a conveyance surface 23 for the tray 90, a belt receiver 25 that receives the flat belt 24, a drive pulley 26 and a driven pulley 27 that actuate the flat belt 24, and a motor (not illustrated) for rotating the drive pulley 26.

As illustrated in FIG. 1, the second conveyor unit 40 is arranged between a conveyance end 29 of the first conveyor unit 21 and a conveyance beginning 51 of the third conveyor unit 50. That is, the second conveyor unit 40 is arranged adjacent to the first conveyor unit 21 on the downstream side in the conveyance direction of the first conveyor unit 21, and the third conveyor unit 50 is arranged adjacent to the second conveyor unit 40 on the downstream side in the conveyance direction of the second conveyor unit 40. Specifically, a conveyance beginning 41 of the second conveyor unit 40 is arranged near the conveyance end 29 of the first conveyor unit 21 and directly below the second conveyor 30 to be connected to the conveyance end 29 of the first conveyor unit 21, and a conveyance end 42 of the second conveyor unit 40 is arranged near a conveyance beginning 51 of the third conveyor unit 50 to be connected to the conveyance beginning 51 of the third conveyor unit 50.

The second conveyor unit 40 is mainly constituted by a flat belt 44 that forms a conveyance surface 43 for the tray 90, a belt receiver 45 that receives the flat belt 44, a drive pulley 46 and a driven pulley 47 that actuate the flat belt 44, and a motor (not illustrated) for rotating the drive pulley 46.

The belt receiver 45 is formed such that its top surface side (the side on which the tray 90 is conveyed) is inclined at a predetermined angle from one end to a predetermined position, and is curved from the predetermined position to the other end. That is, an upward inclined portion 40A is formed on the one end side of the belt receiver 45, and a curved portion 40B is formed on the other end side of the belt receiver 45. The predetermined position is a position that is set according to an inclination angle θ2 of the conveyance surface 43 for the tray 90 of the second conveyor unit 40. The predetermined position is set according to installation heights of the first conveyor 20 and the second conveyor 30 from a ground surface, an inclination angle θ1 of a conveyance surface 33 for the article 95 of a fifth conveyor unit 32 of the second conveyor 30 described later, the size of the article 95 conveyed by the second conveyor 30, and the like.

The second conveyor unit 40 is formed such that the conveyance surface 43 for the tray 90 is inclined upward toward the conveyance end 42 from the conveyance beginning 41, by inclining the top surface side of the belt receiver 45. That is, the conveyance end 42 of the second conveyor unit 40 is formed at a position higher than the conveyance beginning 41. The inclination angle θ2 of the conveyance surface 43 for the tray 90 of the second conveyor unit 40 is set according to the positional relationship between a conveyance end 34 of the fifth conveyor unit 32 and the tray 90 conveyed to the article loading position T by the second conveyor unit 40, by taking into consideration the installation heights of the first conveyor 20 and the second conveyor 30 from the ground surface, the inclination angle Θ1 of the conveyance surface 33 for the article 95 of the fifth conveyor unit 32, the size of the article 95 conveyed by the second conveyor 30, and the like.

By forming the conveyance surface 43 for the tray 90 of the second conveyor unit 40 to be inclined upward toward the conveyance end 42 from the conveyance beginning 41, the distance between the conveyance surface 43 for the tray 90 of the second conveyor unit 40 and the conveyance end 34 of the fifth conveyor unit 32 becomes shorter, compared with a case where the conveyance surface 43 for the tray 90 is horizontally formed. That is, the distance between the conveyance end 34 of the fifth conveyor unit 32 and the tray 90 conveyed by the second conveyor unit 40 becomes closer, compared with a case where the conveyance surface 43 for the tray 90 is horizontally formed. Therefore, the distance between the article 95 and the tray 90 at the time when the article 95 is loaded onto the tray 90 becomes close, and the dropping distance of the article 95 to the tray 90 becomes short.

In the second conveyor unit 40, the conveyance end 42 side of the conveyance surface 43 for the tray 90 is curved by curving the other end part on the top surface side of the belt receiver 45. Accordingly, the conveyance surface 43 for the tray 90 on the conveyance end 42 side becomes horizontal at the same height as a conveyance surface 52 for the tray 90 of the third conveyor unit 50.

The conveyance beginning 51 of the third conveyor unit 50 is arranged near the conveyance end 42 of the second conveyor unit 40 to be connected to the conveyance end 42 of the second conveyor unit 40. By arranging the third conveyor unit 50 in this manner, the third conveyor unit 50 is arranged diagonally forward and above the first conveyor unit 21. The tray 90 on which the article 95 is placed (the tray 90 conveyed by the third conveyor unit 50) is conveyed at a position higher than the position at which the tray 90 before the article 95 is loaded thereon is conveyed (the tray 90 conveyed by the first conveyor 20). In this manner, by arranging the third conveyor unit 50 above the first conveyor unit 21, when defective transfer of the article 95 onto the tray 90 occurs on the third conveyor unit 50, an operator can perform a correction operation in an appropriate posture, and the workability of the operation can be improved.

As illustrated in FIG. 1, the second conveyor 30 is mainly constituted by a fourth conveyor unit 31 arranged above and parallel to the first conveyor unit 21, and the fifth conveyor unit 32 arranged adjacent to the fourth conveyor unit 31 on a downstream side in the conveyance direction.

In the fourth conveyor unit 31, at least one or more (three in FIG. 1) belt conveyors 39 are arranged along the second conveyance path 12. The belt conveyor 39 is mainly constituted by a flat belt 35 that forms the conveyance surface 33 for the article 95, a belt receiver 36 that receives the flat belt 35, a drive pulley 37 and a driven pulley 38 that actuate the flat belt 35, and a motor for rotating the drive pulley 37 (not illustrated).

The fourth conveyor unit 31 is arranged directly above the first conveyor unit 21 of the first conveyor 20. That is, in the conveyance equipment 10, a part of the first conveyor 20 and the second conveyor 30 are arranged in two stages, top and bottom.

The fifth conveyor unit 32 is a part from which the article 95 is loaded onto the tray 90 conveyed by the second conveyor unit 40. The fifth conveyor unit 32 is formed separately from the fourth conveyor unit 31 on the end side of the second conveyance path 12. A downward inclined portion 32A is formed in the fifth conveyor unit 32 such that the conveyance surface 33 for the article 95 is inclined downward toward the second conveyor unit 40. That is, the conveyance end 34 of the fifth conveyor unit 32 is formed to incline downward toward the second conveyor unit 40. The inclination angle Θ1 of the conveyance surface 33 for the article 95 of the fifth conveyor unit 32 is set according to the positional relationship between the conveyance end 34 of the fifth conveyor unit 32 and the tray 90 conveyed to the article loading position T by the second conveyor unit 40, by taking into consideration the installation heights of the first conveyor 20 and the second conveyor 30 from the ground surface, the inclination angle θ2 of the conveyance surface 43 for the tray 90 of the second conveyor unit 40, the size of the article 95 conveyed by the second conveyor 30, and the like. The larger the inclination angle Θ1 of the conveyance surface 33 for the article 95 of the fifth conveyor unit 32, the easier it becomes to load the article 95 onto the tray 90 conveyed by the second conveyor unit 40. Thus, the accuracy of placing the article 95 on the tray 90 (the accuracy of loading the article 95 onto the tray 90) is improved. Therefore, the inclination angle Θ1 is set by taking into consideration the ease of loading the article 95 onto the tray 90, and the difficulty for the article 95 to be upright on the tray 90.

An operation of loading the article 95 onto the tray 90 will be described.

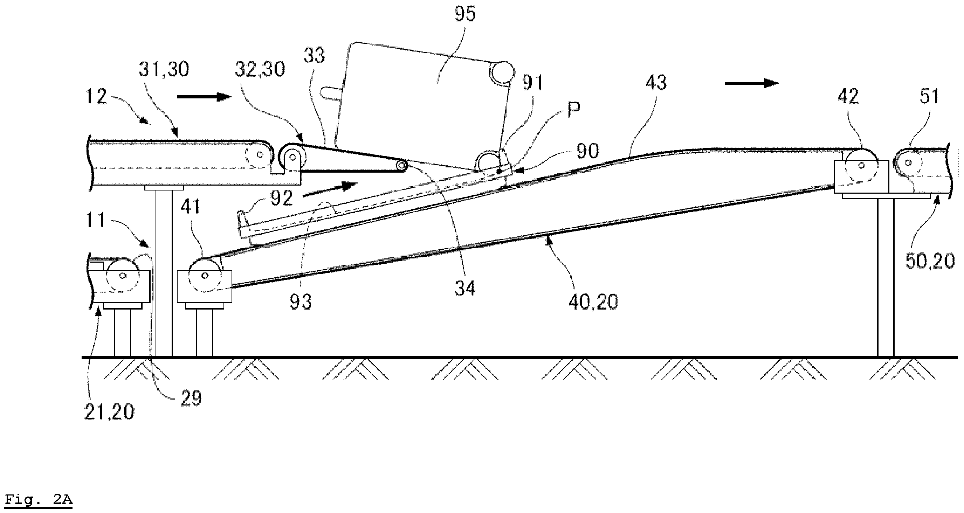

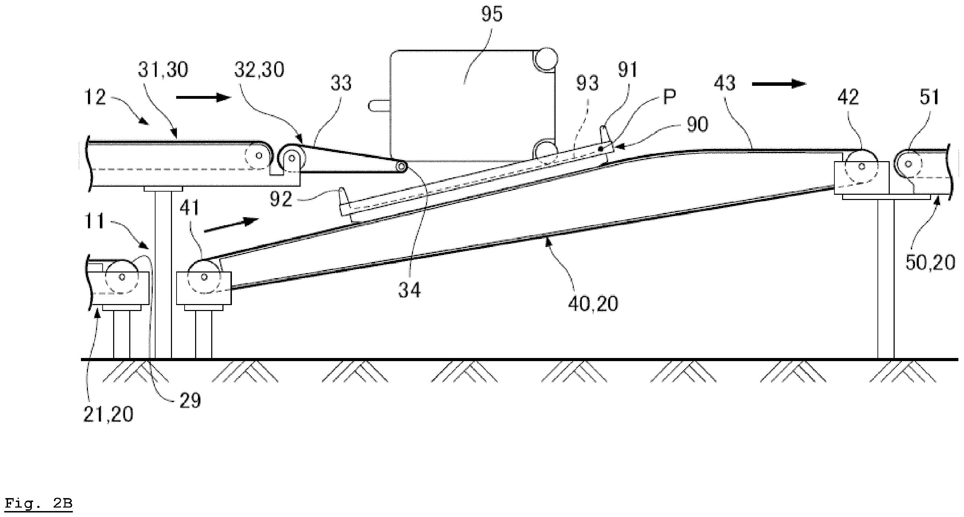

As illustrated in FIG. 2A to FIG. 2C, the tray 90 conveyed by the first conveyor unit 21 waits at a predetermined position on an upstream side of the conveyance beginning 41 of the second conveyor unit 40. Then, when the article 95 is conveyed to a predetermined position on an upstream side of the fifth conveyor unit 32, the conveyance of the tray 90 is started so as to be synchronized with the conveyance of the article 95, and the tray 90 is conveyed toward the article loading position T.

On the other hand, when the tray 90 is not waiting at the above-described predetermined position (when the conveyance of the tray 90 is delayed), the article 95 waits at the predetermined position on the upstream side of the fifth conveyor unit 32. Then, when the tray 90 is conveyed to the predetermined position on the upstream side of the conveyance beginning 41, the conveyance of the article 95 is started so as to be synchronized with the conveyance of the tray 90, and the article 95 is conveyed toward the article loading position T.

As illustrated in FIG. 2A, the fifth conveyor unit 32 loads the article 95 onto the tray 90 at the timing when the tray 90 reaches the vicinity of the article loading position T. At this time, the fifth conveyor unit 32 loads the article 95 toward a rising base edge P of the rising wall plate portion 91 of the tray 90, such that a front lower corner portion of the article 95 abuts the rising base edge P of the rising wall plate portion 91 on a front side in the direction of conveyance of the tray 90.

In the conveyance equipment 10, the second conveyor unit 40 that conveys the tray 90 to the article loading position T is formed to be inclined upward toward the conveyance end 42 from the conveyance beginning 41. Thus, the distance between the conveyance end 34 of the fifth conveyor unit 32 and the tray 90 conveyed to the article loading position T by the second conveyor unit 40 becomes close. Therefore, the article 95 is placed on the tray 90 while maintaining a posture substantially the same as the posture (horizontal posture) at the time of conveyance by the second conveyor 30.

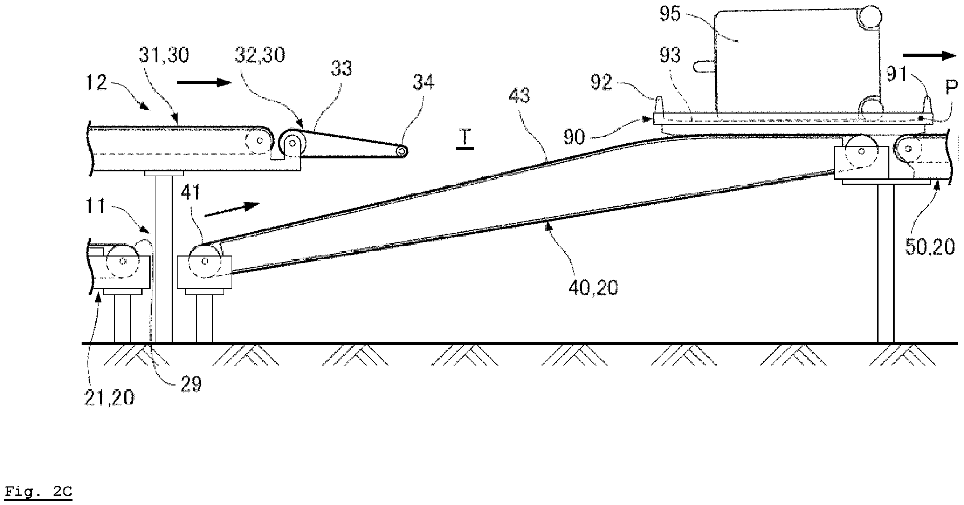

As illustrated in FIG. 2C, when the article 95 is placed on the tray 90, the second conveyor unit 40 conveys the tray 90 on which the article 95 is placed toward the conveyance beginning 51 of the third conveyor unit 50. Here, since the tray 90 is conveyed on the conveyance surface 43 of the second conveyor unit 40 formed into a curve, the posture is changed from an inclined posture to a horizontal posture. Subsequently, the third conveyor unit 50 conveys the tray 90 conveyed by the second conveyor unit 40 toward a conveyance end (not illustrated).

As described above, according to the present embodiment, from the conveyance surface 43 for the tray 90 of the second conveyor unit 40 is inclined upward toward the article loading position T from the conveyance beginning 41. Thus, the tray 90 conveyed by the second conveyor unit 40 can receive the article 95 in a state where the tray 90 picks up the article 95 that is loaded thereon from the fifth conveyor unit 32 of the second conveyor 30. Therefore, the article 95 can be loaded onto the tray 90 with a posture substantially the same as the posture at the time of conveyance by the second conveyor 30, and a variety of articles 95 can be made difficult to be upright on trays 90 at the time when the articles 95 are loaded onto the trays 90. The distance between the article 95 and the tray 90 at the time when the article 95 is loaded onto the tray 90 is close, and the dropping distance of the article 95 to the tray 90 is short. Therefore, the impact to the article 95 at the time when the article 95 is loaded onto the tray 90 is suppressed, and the article 95 can be smoothly transferred to the tray 90.

Although the conveyance surface 33 for the article 95 of the fifth conveyor unit 32 of the second conveyor 30 is formed to be inclined downward toward the second conveyor unit 40 in the present embodiment, the conveyance surface 33 is not limited to this, and may be formed horizontally, without being inclined toward the second conveyor unit 40.

Although the fifth conveyor unit 32 is provided separately from the second conveyor 30 in the present embodiment, the fifth conveyor unit 32 is not limited to this, and may be formed integrally with the adjacent second conveyor 30. Additionally, although the fifth conveyor unit 32 is constituted by one belt conveyor, the fifth conveyor unit 32 may be constituted by a plurality of belt conveyors.

Although the second conveyor unit 40 is constituted by one belt conveyor in the present embodiment, the second conveyor unit 40 is not limited to this, and may be constituted by a plurality of belt conveyors.

Although each of the conveyor units 21, 31, 32, 40 and 50 is constituted by a belt conveyor in the present embodiment, each of the conveyor units 21, 31, 32, 40 and 50 is not limited to this, and may be a chain conveyor, an apron conveyer, or the like as long as the article 95 can be conveyed.

Although the third conveyor unit 50 is arranged diagonally forward and above the first conveyor unit 21 in the present embodiment, the third conveyor unit 50 is not limited to this. The third conveyor unit 50 may be arranged at a height about the same as the first conveyor unit 21 by gradually inclining the conveyance end 42 side of the second conveyor unit 40 downward.

### Reference Signs List

- 10: Conveyance equipment
- 11: First conveyance path
- 12: Second conveyance path
- 20: First conveyor
- 30: Second conveyor
- 40A: Upward inclined portion
- 90: Tray
- 95: Article

## Claims

1. Conveyance equipment comprising a first conveyor that conveys a tray on which an article can be placed along a first conveyance path, and a second conveyor that is provided above the first conveyance path, and conveys the article along a second conveyance path, the second conveyor loading the article onto the tray conveyed by the first conveyor,
wherein, in at least a part of the first conveyor, an upward inclined portion is formed to incline upward in a conveyance direction of the article.

2. The conveyance equipment according to claim 1,
wherein the first conveyor is constituted by at least a first conveyor unit and a second conveyor unit,
the first conveyor unit is arranged below the second conveyor and parallel to the second conveyor, and
the second conveyor unit is arranged adjacent to the first conveyor unit on a downstream side in a conveyance direction of the first conveyor unit.

3. The conveyance equipment according to claim 2, Wherein, in at least a part of the second conveyor unit, an upward inclined portion to incline upward in the conveyance direction of the article and a curved portion are formed.

4. The conveyance equipment according to claim 2 or claim 3, wherein
the first conveyor includes a third conveyor unit that is arranged adjacent to the second conveyor unit on a downstream side in a conveyance direction of the second conveyor unit, and
the third conveyor unit is arranged above the first conveyor unit.

5. The conveyance equipment according to any one of claim 1 to claim 4,
wherein, on a downstream side in a conveyance direction of the second conveyor, a downward inclined portion is formed to incline downward toward the first conveyor.

6. The conveyance equipment according to any one of claim 2 to claim 5, wherein
the second conveyor is constituted by
a fourth conveyor unit arranged above and parallel to the first conveyor unit, and
a fifth conveyor unit arranged adjacent to the fourth conveyor unit on a downstream side in a conveyance direction of the fourth conveyor unit, and
in at least a part of the fifth conveyor unit, a downward inclined portion is formed to incline downward toward the first conveyor.
